# EUROPÄISCHE PATENTANMELDUNG

(11) **EP 2 253 799 A2**
(43) Veröffentlichungstag der Anmeldung: **24.11.2010**
(21) Anmeldenummer: 09009327.9
(22) Anmeldetag: 17.07.2009
(51) Int. Cl.: E21B 43/28, F24J 3/08

(54) **Verfahren zur Wärmegewinnung aus goethermischer Energie**

(30) Priorität: 13.05.2009 DE 102009021160
(71) Anmelder: Wagner, Ulrich, Dr., 06408 Biendorf (DE)
(72) Erfinder: Wagner, Ulrich, Dr., 06408 Biendorf (DE); Balthasar, Wolff, Dr., 40833 Ratingen (DE); Michaelis, Hubert, 61352 Bad Homburg (DE)
(74) Vertreter: Tragsdorf, Bodo

(57) **Zusammenfassung**

Die Erfindung bezieht sich auf ein Verfahren zur Wärmegewinnung aus geothermischer E. nergie aus tief gelegenen, noch nicht erschlossenen Salzlagerstätten, wobei die gewonnene Wärmeenergie zur Erzeugung von Strom oder für andere Zwecke genutzt werden kann.

Hierzu wird als Lösung vorgeschlagen, dass unterirdisch eine Aussolung der Salzlagerstätte und oberirdisch die Wärmeenerglegewinnung vorgenommen werden, wobei
a) zur Aussolung über Spülrohre Wasser in die Salzlagerstätte eingebracht wird unter Bildung einer durch die vorhandene Erdwärme aufgeheizten Sole,
b) die heiße Sole abgepumpt und im Kreislauf einer Anlage zur Energlegewinnung zugeführt und dabei auf Normaltemperatur abgekühlt wird,
c) oberirdisch die abgekühlte Sole oder eine bestimmte Menge an Sole mindestens zeitweise ausgekreist und durch Frischwasser ersetzt wird,

und dabei die Geschwindigkeit der Aussolung durch Ersatz eines Teils der Im Kreislauf geführten Sole durch Wasser so gesteuert wird, dass die Aussolgesahwlndigkelt höher ist als die Flleßgeschwindigkeit des plastischen Salzes, und während der kombinierten Aussolung und Energiegewinnung ein sich in seinem Volumen stetig vergrößernder Hohlraum mit stelgender verfügbarer Wärmemenge gebildet wird.

## Beschreibung

Die Erfindung bezieht sich auf ein Verfahren zur Wärmegewinnung aus geothermischer Energie aus tief gelegenen Salzlagerstätten, wobei die gewonnene Wärmeenergie zur Erzeugung von Strom oder für andere Zwecke genutzt werden kann.

Zur Wärmegewinnung aus geothermischer Energie gibt es eine Vielzahl unterschiedlicher Verfahrensweisen.

Aus der Praxis ist es bekannt, zwei Bohrungen In das Erdreich bzw. in das Gestein einzubringen, wobei die eine Bohrung zur Zuführung für ein Wärmeträgermedium, wie z.B. Wasser, bestimmt ist, und die andere Bohrung bzw. Leitung zur Zurürkführung des durch die Erdwärme erwärmten Wassers an die Erdoberfläche. Dabei durchströmt das zugeführte Wasser in der Tiefe das Erdreich bzw. das Gestein und wird durch die Erdwärme aufgeheizt. Die Abstände zwischen den beiden Bohrungen betragen beispielsweise einen bis zwei Kilometer. Die Förderung des erwärmten Wassers erfolgt In der Regel mittels einer Pumpe. Übertage wird die Wärme des Wassers mit Hilfe eines Wärmetauschers auf einen Kreislauf übertragen, in dem Dampf für die Stromgewinnung erzeugt wird. Das abgekühlte Wasser wird über die erste Bohrung wieder in das Erdreich bzw. in das Gestein verpresst. In Regionen mit vulkanischer Aktivität, wie beispielsweise In Neuseeland, island oder den USA, können bereits In Tiefen von weniger als 3000 m Temperaturniveaus über 200 °C erreicht werden, die mittels hydrothermaler, Hot-Rock-, oder Sedimentverfahren für die Stromerzeugung oder Wärmegewinnung nutzbar gemacht werden. Als wesentlich problematischer erweist sich die Erschließung geothermer Energie In Gebieten ohne vulkanische Aktivität. In diesen Gebieten muss man sich entweder mit niedrigen Temperaturniveaus und damit geringen Wirkungsgraden der Stromerzeugung begnügen oder In Tiefen von mehr als 5000 m vordringen. Bei Letzterem werden aufgrund der großen Druckverluste Ober Rohrleitungen und Gesteinsdurchdringung die möglichen Volumenströme stark begrenzt, wodurch sich nur geringe Stromausbeuten erzielen lassen. Hinzu kommen in diesen Tiefen erhebliche Risiken, die sich aus Schwierigkeiten bei der Lokalisierung hydrothermaler Ströme sowie geologischer Bruchstellen ergeben.

Aus der DE 24 49 807 B ist eine Anlage zur Erschließung von Erdwärme aus einem Salzdlapar mit einer Kaverne bekannt, wobei In der Kaverne ein Medium als Wärme aufnehmende und Wärme abgebende Flüssigkeit gespeichert wird. In die Kaverne führt eine Rohrleitung, die innerhalb der Kaverne spiralförmig verläuft und mit einer Steigleitung verbunden ist. Die Stelgleitung und die Rohrleitung stehen mit einem Wärmetauscher in Verbindung, sodass ein geschlossener Kreislauf gebildet ist in diesem zirkuliert Wasser als Wärmetransportmedium.

Bei einer Speicherung von Erdöl oder Erdgas in der Kaverne wird die Erdwärme über das Speichermedium auf den in der Kreislaufleitung zirkulierenden salzfrelen Wärmeträger übertragen. Aufgrund der kleinen Wärmeübertragungsflichen kann nur eine geringe energetische Ausbeute erzielt werden.

Bekannt ist auch die Gewinnung geothermischer Energie aus einer Salzlagerstätte in einer Tiefe von etwa 1000 m (US 5 370182 A). Dazu werden eine oder mehrere Bohrungen bis In das Salzlager vorgetrieben und die entstandenen Bohrlöcher mit mehreren Rohrleitungen bestückt. Zunächst wird durch Auflösen mit Wasser eine Kaverne geschaffen, In der nach Abschluss der Aussolung der Wärmeaustausch zwischen dem Salz und im Kreislauf gefahrener Sole erfolgt. Die Leitungen zur Zu- und Abführung der Sole sind von einem Gehäuse umgeben, das mit Druckluft oder Edelgas beaufschlagbar ist, das In die Kaverne gelangt, wobei Ober den Druck die Temperatur der Sole als Wärmeträger gesteuert werden kann. Diese Lösung ist für sehr kleine Kavernen bestimmt und ermöglicht nur eine geringe Energleausbeute, da sich die Sole bis auf Temperaturen von maximal ca. 70 °C erwärmt.

Die Zuführung von Druckluft in die Kaverne wirkt sich nachteilig auf den Soledurchsatz aus. Außerdem ist die Lösung nicht für Gewinnung von Wärme aus Salzlagerstätten geeignet, in denen das Salz In plastischer Form vorliegt.

Aus der US 6 035 949 A ist auch die Nutzung von Wärmeenergie aus tief liegenden Salzlagerstätten bekannt, bei denen das Salz bereits in plastischer Form vorliegt. Hierzu wird als Lösung vorgeschlagen, ein Doppelmantelrohr im Salzbett zu versenken, das von außen durch das Salzbett aufgeheizt und von innen von Wasser durchströmt wird. Das Doppelmantelrohr übernimmt hier die Funktion eines Wärmetauschers. Aufgrund des Durchmessers der Gesteinsbohrung besitzt der bis in das Salzbett eingebrachte Wärmetauscher nur relativ kleine Austauschflächen. Dadurch sind die Volumenströme, die über das Doppelmantelrohr zur Aufheizung das Wärmeträgermedlums Wasser eingebracht werden können gering und die erreichbaren Aufheizraten stark begrenzt. Zudem ist zu erwarten, dass sich trotz guter Wärmeleitfähigkeit im Salz die Umgebung um das Rohr in kurzen Zeiten bereits merklich abkühlt. Bedingt durch den erforderlichen Aufwand zum Setzen der Gesteinsboh-rung und der erzielbaren Energiegewinnung ist dieses Verfahren betriebswirtschaftlich nicht rentabel.

Der Erfindung liegt die Aufgabe zugrunde, ein Verfahren zur Wärmegewinnung aus geothermischer Energie zu schaffen, das sich durch einen hohen Wirkungsgrad auszeichnet und eine lange Betriebsdauer unter wirtschaftlichen Bedingungen ermöglicht. Ernfindungsgemäß wird die Aufgabe durch die Im Anspruch 1 angegebenen Merkmale gelöst. Vorteilhafte Ausgestaltungen und Weiterbildungen des Verfahrens sind Gegenstand der Ansprüche 2 bis 13.

Gemäß der zur Wärmegewinnung vorgeschlagenen Lösung wird unterirdisch eine Aussolung der Salzlagerstätte vorgenommen und oberirdisch die gewonnene helße Sole zur Wärmeenergiegewinnung genutzt. Zur Aussolung wird Wasser über Spülrohre in die Salzlagerstätte eingebracht. Durch die in der tiefgelegenen Salzlagerstätte vorhandene Erdwärme wird die durch den Aussolvorgang gebildete Sole aufgeheizt, als heiße Sole, beispielsweise mit einer Temperatur von ca. 200 °C, abgepumpt und Im Kreislauf einer Anlage zur Energiegewinnung zugeführt und dabei auf Normaltemperatur abgekühlt. Zur Energlegewinnung Übertage können die aus dem Bereich der Geothermie bekannten Anlagen eingesetzt werden.

Als weitere verfahrenstechnische Maßnahme wird die durch die Wärmegewinnung abgekühlte Sole oder eine bestimmte Menge an Sole mindestens zeitweise ausgekreist und durch Frischwasser ersetzt. Dabei wird die Geschwindigkeit der Aussolung durch Ersatz eines Teils der im Kreislauf geführten Sole durch Wasser so gesteuert, dass die Aussolgeschwindigkeit höher Ist als die Flleßgeschwindigkeit des plastischen Salzes. Während der kombinierten Aussolung und Energiegewinnung wird ein sich In seinem Volumen stetig vergrößernder Hohlraum mit steigender verfügbarer Wärmemenge gebildet.

Vorzugsweise wird das Verfahren zeitlich In zwei Stufen durchgeführt. Zuerst wird in einer ersten Stufe eine Aussolung vorgenommen, wobei die Übertage geförderte Sole abgekühlt und verworfen wird. Nach vollständiger Verlösung des in die Spülrohre gedrückten Salzes und beginnender Ausbildung eines Hohlraumes unter den Spülrohren wird das Verwerfen der Sole eingestellt und auf Kreislauffahrweise mit Wärmegewinnung umgestellt, d.h., die heiße Sole wird abgepumpt und Im Kreislauf einer Anlage zur Energiegewinnung zugeführt und dabei auf Normaltemperatur abgekühlt. Oberirdisch wird die abgekühlte Sole oder eine bestimmte Menge an Sole mindestens zeitweise ausgekreist und durch Frischwasser ersetzt

In solchen Fällen, wo sich während der über Jahre oder Jahrzehnte erstreckenden Aussolung die Plastizität des Salzlagerstockes verändert, können durch Veränderung der Aussolmenge Unterschiede in der Plastizität des Salzes ausgeglichen werden. Mit steigender Plastizität oberhalb eines vorgegebenen Grenzwertes wird die Aussolgeschwindigkeit über das vorhandene Pumpsystem erhöht bzw. bei sinkender Plastizität reduziert.

Das Übertage in den Kreislauf zugeführte Frischwasser, bei gleichzeitiger Auskreisung einer äquivalenten Menge an Sole, wird In seiner Menge und/oder Temperatur so eingestellt, dass die Temperatur der geförderten heißen Sole nur In geringem Maße von der in der Salzlagerstätte herrschenden Temperatur abweicht.

Zur Erzielung möglichst geringer thermischer Verluste wird gemäß einer bevorzugten Ausführung vor Beginn der ersten Stufe in die Bohrung ein konzentrisch angeordnetes erstes Spülrohr eingehängt und in dieses ein zweites Spülrohr eingeführt, wobei eines der Spülrohre bis in die Salzschicht geführt wird und sich mit Salz füllt. Das andere Spülrohr wird so tief versetzt, dass es sich kurz oberhalb des nach oben drückenden Salzes befindet.

Das Spülrohr, das sich kurz oberhalb des nach oben drückenden Salzes befindet, wird mit fortschreitender Aussolung immer tiefer gesetzt, bis es sich unterhalb des anderen Spülrohres befindet. Ab diesem Zeitpunkt beginnt die zweite Stufe, wobei die Spülrohre so bewegt werden, dass ein langer Strömungsweg für die eintretende Sole entsteht. Dadurch wird eine möglichst lange Verweilzeit der Sole Im Hohlraum erreicht und somit eine hohe Soletemperatur. Der Abstand zwischen Eintritts- und Austrittsrohrieltung sollte daher so groß wie möglich gehalten werden, um eine optimale Erwärmung der Sole zu erreichen. Das zum Transport der heißen Sole bestimmte Rohr ist wärmetechnisch so ausgelegt, dass während des Transportweges nur geringe thermische Verluste eintreten.

Zur Verringerung von Salzablagerungen bzw. Verkrustungen In den Wärmetauscheranlagen wird der Übertage geförderten Sole das in den Kreislauf zugeführte Frischwasser unmittelbar vor dem Wärmeaustausch zugesetzt. Dieser Zusatz kann auch noch nach dem Wärmeaustausch vorgenommen werden.

Die nach dem Wärmeaustausch abgekühlte, verdünnte Sole wird über eines der Spülrohre wieder zurück in die Salzlagerstätte geführt und zur weiteren Aussolung verwendet.

In Abhängigkeit von der stofflichen Zusammensetzung des Salzstockes werden über eine zusätzliche Rohrleitung Sulfat fällende Chemikalien, wie z.B. CaCl₂ oder BaCl₂, In den Hohlraum der Satzlagerstätte eingebracht. Die Rohrleitung ist in die Solezufuhrleitung integriert. Dadurch wird verhindert, dass sich aus wasserlöslichen Sulfaten während der Krelslauffahrwelse Gips-Kristalle bilden können. Diese Maßnahme dient Insbesondere zum Schutz der Wärmetauscher vor Verkrustungen.

Außerdem kann die nach dem Wärmeaustausch anfallende abgekühlte Sole in bestimmten Zeltabständen noch mit Na₂CO₃ und/oder NaOH gereinigt werden. Dabei werden Gehalte an Ca/Mg gefällt und den Wärmeübergang verschlechternde Sulfatverkrustungen vermieden. Anstelle einer konzentrischen Anordnung der Rohre zur Zu- und Abführung der Sole, können die Rohrleitungen für Solezufuhr und -abfuhr auch beabstandet zueinander eingebracht und angeordnet werden. Die Abstände zwischen den beiden Bohrungen für die Einbringung der Rohre können bis zu mehreren Kilometern betragen. Die Rohre werden dann unterirdisch über eine horizontale Bohrung oder einen vorhandenen, sich in horizontaler Richtung erstreckenden Hohlraum miteinander verbunden.

Gemäß einer weiteren Ausführung kann auch noch mindestens eine weitere Bohrung gesetzt und in diese Spülrohre eingehängt werden, derart, dass über diese eine zweite Verbindung zu dem während der Aussolung gebildeten Hohlraum hergestellt wird, und die vorhandene Sole über einen zweiten Kreislauf zur Wärmegewinnung genutzt wird. In diesem Fall ist der Hohlraum dann mit zwei separaten Wärmerückgewlnnungsanlagen verbunden. Dadurch kann die doppelte Menge an Energie pro Zeiteinheit gewonnen werden, wobei jedoch der höhere Aufwand für eine zweite Bohrung zu berücksichtigen ist.

Die eingereichte Erfindung ermöglicht eine sehr wirtschaftliche Wärmegewinnung aus geothermischer Energie in hoher Raum-Zelt-Ausbeute.

Die erfindungsgemäße Verfahrensweise hat im Vergleich zu den bekannten Verfahren den entscheidenden Vorteil, dass einerseits Wärmegewinnung und andererseits die Vergrößerung des Hohlraumes bzw. der Kaverne miteinander verknüpft werden. Mit zunehmender Größe des Hohlraumes entstehen größere Wärmeaustauschflächen und die Verweilzeiten der zugeführten Sole verlängern sich. Dadurch wird eine Annäherung der Soletemperatur an die Salzumgebungstemperatur erreicht. Außerdem werden günstige Bedingungen für eine besonders wirtschaftliche Wärmerückgewlnnung geschaffen. Eine Auskühlung des Hohlraumes bzw. der Kaverne kann somit über einen langen Zeitraum (mehrere Jahre bis Jahrzehnte) praktisch ausgeschlossen werden. Durch die großen Verweilzeiten wird es zudem möglich, große Volumenströme in der Kreislauffahrwelse und damit hohe Energieübertragungsraten zu erreichen.

Die Erfindung ermöglicht, sehr tiefe, bereits stark plastische Salzschichten mit einem sehr hohen Temperaturniveau (mehr als 200 °C) für die geothermische Wärmegewinnung zu nutzen. Mit der vorgeschlagenen Verfahrensweise lassen sich unterschiedliche Plastizitäten des Salzes beherrschen. Weiterhin kann eine optimale Temperaturführung unabhängig von der vorliegenden Plastizität des Salzes realisiert werden.

Ein zusätzlicher Vorteil besteht noch darin, dass nach der energetischen Nutzung der entstandene Hohlraum wie bei normalen Salzkavernen zur Untergrundspeicherung verschledenster Stoffe genutzt werden kann.

Die Erfindung wird nachstehend an einem Beispiel erläutert. In der zugehörigen Zeichnung zeigen:
- Fig.1: die erste Stufe einer ersten Ausführung zur Wärmegewinnung in vereinfachter sche- matischer Darstellung,
- Fig. 2: die zweite Stufe gemäß der ersten Ausführung,
- Fig.: 3 die erste Stufe einer zweiten Ausführung zur Wärmegewinnung in vereinfachter schematischer Darstellung,
- Fig. 4: die zweite Stufe gemäß der zweiten Ausführung und
- Fig. 5: eine dritte Ausführung zur Wärmegewinnung **i**n vereinfachter schematischer Dar- stallung.

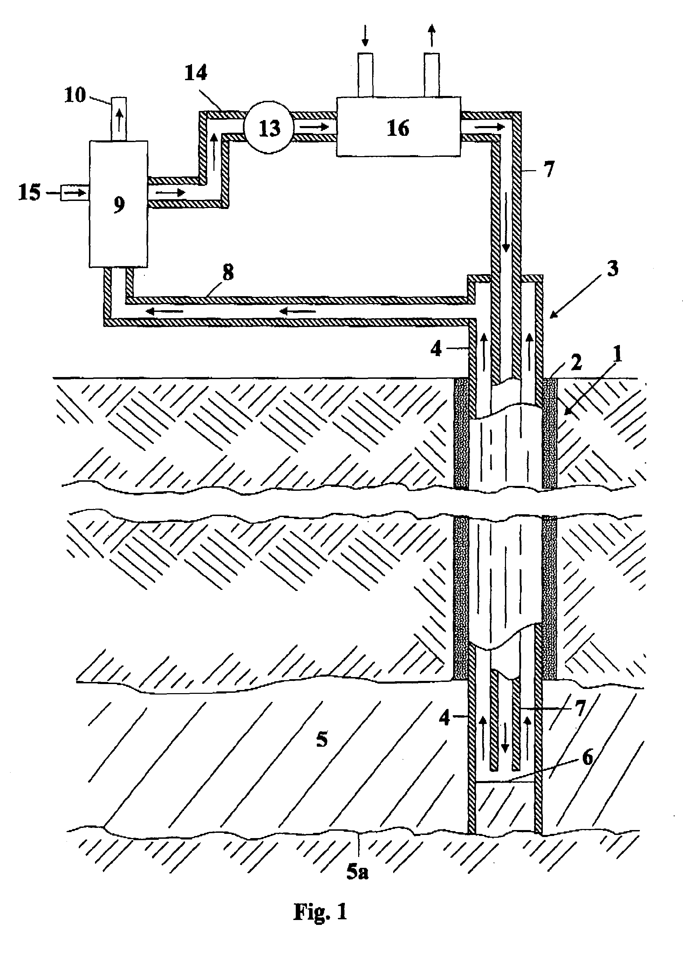

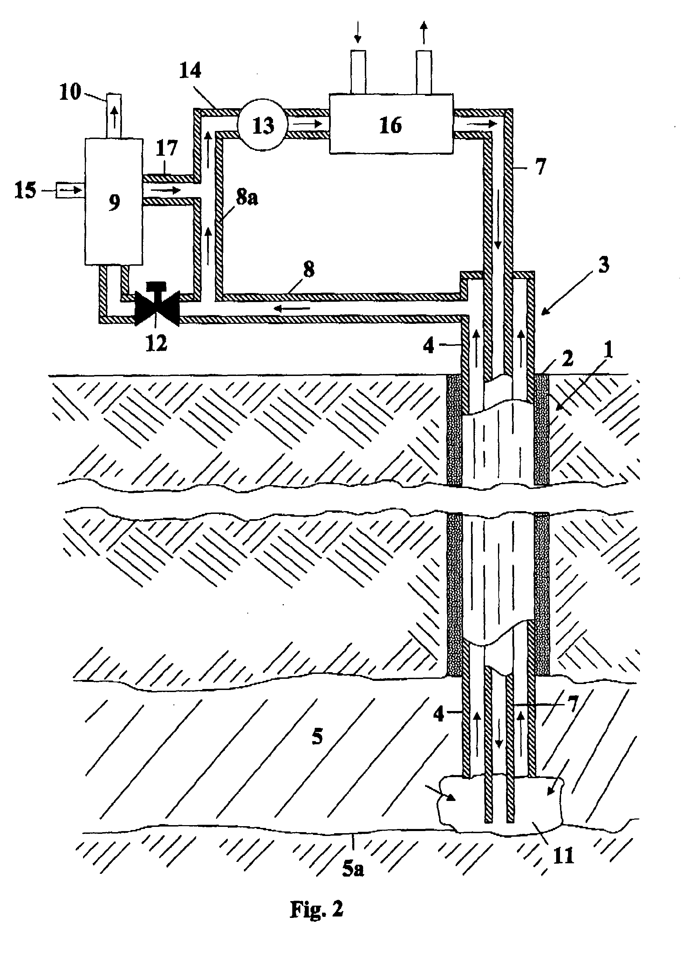

In den Figuren 1 und 2 Ist eine erste Ausführung zur Realisierung der erflndungsgemäßen Verfahrensweise gezeigt.

In eine Salzschicht, die sich in ca. 5500 m Tiefe befindet und eine Mächtigkeit von ca. 300 m aufweist, wird eine Bohrung 1 eingebracht. Dabei wird die gesamte Salzschicht durchbohrt, bis die Bohrung die unter dem Salz befindliche Gesteinsschicht erreicht. Die Bohrlochverrohrung 3 wird bis zum Eintritt in die Salzschicht zementiert. Die Zementierung ist mit dem Bezugszeichen 2 gekennzeichnet. In die Bohrung 1 wird zunächst ein konzentrisches Spülrohr 4 eingehängt, das bis zur Unterkante 5a der Salzschicht 5 geführt wird. Aufgrund der Plastizität des Salzes in dieser Tiefe füllt sich das Rohr 4 langsam mit Salz, wie durch den Füllstand 6 angedeutet.

Nachfolgend wird ein zweites Spolrohr 7 In das erste Spülrohr 4 eingehängt, das so tief gesetzt wird, dass es sich kurz oberhalb des nach oben drückenden Salzes 6 befindet. Beide Rohre 4, 7 werden Übertage verflanscht Danach wird mit der Aussolung begonnen, indem Süßwasser 15 über das innere Rohr 7 geführt und das Salz sukzessive aus dem äußeren Spülrohr 4 verlöst wird. Die entstehende Salzsole wird Ober das äußere Rohr 4 nach Übertage verdrängt und gelangt über die Leitung 8 In einen ersten Wärmetauscher 9. Nach erfolgter Abkühlung wird die Salzsole über die Leitung 10 ausgetragen und verworfen. Über die In die Leitung 14 eingebundene Pumpe 13 wird Frischwasser 15 angesaugt, im Wärmetauscher 9 erwärmt und Ober das Innere Rohr 7 zur Aussolung nach unten geleitet. Der In der Fig. 1 gezeigte Wärmetauscher 16 ist während der Fahrweise der Stufe I nicht zugeschalten. Mit fortschreitender Aussolung wird das innere Spülrohr 7 immer tiefer gesetzt, bis es sich kurz oberhalb der unter dem Salz liegenden Gesteinsschicht befindet. Ab diesem Zeltpunkt wird das äußere Spülrohr 4 langsam nach oben gezogen, ohne den Aussolprozess zu unterblnden. Sobald mit dem Höhersetzen des äußeren Spülrohres 7 begonnen wird, wird das Verwerfen der Sole eingestellt (Verfahrenstufe I) und auf Krelslauffahrweise (Verfahrensstufe II) mit Wärmegewinnung umgeschalten, wie in Fig. 2 dargestellt.

Zur besseren Veranschaullchung der Verfahrensstufe II ist das Übertage angeordnete Leitungssystem in Fig. 2 etwas ausführlicher dargestellt. Prinzipiell können die beiden Verfahrensstufen I und II über ein Leitungssystem unter Einbindung entsprechender Ventile betrieben werden.

Die Übertage geförderte heiße Sole wird über die Leitungen 8 und 8a sowie 14 dem Wärmetauscher 16 zur Wärmegewinnung zugeführt und nach erfolgter Abkühlung Ober das Innere Rohr 7 wieder zur Aussolung nach unten geleitet.

Zur Auskrelsung der erforderlichen Menge an Sole wird das Regelventli 12 geöffnet. Die ausgekreiste heiße Sole durchströmt den ersten Wärmetauscher 9 und erwärmt zugeführtes Frischwasser 15, das die ausgekreiste Menge ersetzt. Das Frischwasser 15 gelangt über die Leitung 17 in den Solestrom. Die Förderung erfolgt mittels der Pumpe 13.

Beispielsweise wird die Kreislaufmenge bis auf den Auslegungswert von 1000 m³/h erhöht. Parallel dazu werden 50 m³/h Sole durch Süßwasser ersetzt Der während des Aussolvorganges entstehende Hohlraum 11 wächst um ca. 10 m³/h, wobei Jedoch zu berücksichtigen ist, dass aufgrund der Plastizität des Salzes ständig frisches Salz nachfleßt, wie durch die beiden Pfeile angedeutet (Fig. 2).

Bei einer Flleßgeschwindlgkeit des Salzes von 50 mm/d lässt sich ein stabiler Hohlraum mit einem Volumen von 30000 m³ aufrechterhalten. Ab diesem Volumen sind Lösefortschritt und Nachflieageschwlndigkeit des Salzes Identisch. Ein Hohlraum dieser Größe sichert eine Verweilzeit der Sole von 10 Stunden und ermöglicht eine weitgehende Annäherung der Temperatur der nach oben geförderten Sole an die Lagerstättentomperatur von 220 °C.

Der nach oben gedrückten Sole werden vor dem Wärmetausch zur Elektroenergleerzeugung 50 m³ entsalztes Süßwasser 15 zugesetzt, die im Gegenstrom mit der ausgekrelsten Sole im Wärmetauscher 9 aufgeheizt wurden. Damit werden Verkrustungen In den Ausrüstungen zum Wärmetausch reduziert bzw. sogar vollständig vermieden. Der Wärmeinhalt von 1000 m³/h Sole mit einer Temperatur von 220 °C Ist ausreichend, um 20 MW Elektroenergie pro Stunde zu erzeugen. Die nach dem Wärmetausch auf 60 °C abgekühlte, mit entsalztem Wasser verdünnte Sole wird über das Innere Spülrohr zurück in die Salzlagerstätte geführt.

Die Wärmegewinnung ist um so besser je größer der Abstand zwischen dem inneren und dem äußeren Spülrohr ist. Aufgrund der Kreislauffahrwelse wird der durch den Aussolvorgang erzeugte Hohlraum kontinuierlich wieder mit abgekühlter Sole aufgefüllt.

Die Substitution von Kreislaufsole durch entsalztes Süßwasser wird nach Erreichen der maximalen Kralslaufmenge so eingestellt, dass bei minimalem Einsatz von Süßwasser eine maximale Soletemperatur erreicht wird. In Jedem Fall muss abgesichert sein, dass die Aussolgeschwindigkeit höher ist als die Fließgeschwindigkeit des Salzes. Solite zu einem späteren Zeitpunkt ein Nachfließen des Salzes nicht mehr möglich sein, kann auf eine reine Krelslauffahrwelse umgeschalten werden.

In Abhängigkeit von der Größe kann die Salzlagerstätte Ober einen Zeitraum von ca. 10 bis 20 Jahren zur Wärmegewinnung genutzt werden.

In der Praxis wird die Salzlagerstätte so lange genutzt, bis das gesamte Salz ausgesolt wurde, also kein Salz mehr nachfließen kann. Das ausgesolte Salz wird, wie ansonsten auch üblich, verworfen. Nach Beendigung der Wärmegewinnung kann die Lagerstätte als Speicher, Insbesondere für Gase genutzt werden.

Nach Beendigung der Nutzung der Lagerstätte zur Wärmegewinnung kann diese auch mit im Kreislauf geführter Menge an Sole wieder aufgefüllt werden.

Zur Erzeugung von Strom aus der mit einer Temperatur von ca. 200 °C gewonnenen Sole können alle an sich bekannten Anlagen aus dem Bereich der Geothermie eingesetzt werden. Die heiße Sole wird zur Verdampfung einer Flüssigkeit in einem Rankine Kreislauf verwendet. Der so erzeugte Dampf wird zum Antrieb eines Generators Ober eine Turbine eingesetzt. Die anfallende Abwärme kann anderweitig, z.B. zur Wärmoversorgung, genutzt werden. Die abgekühlte Sole wird wieder in den Hohlraum der Salzlagerstätte zurückgeführt.

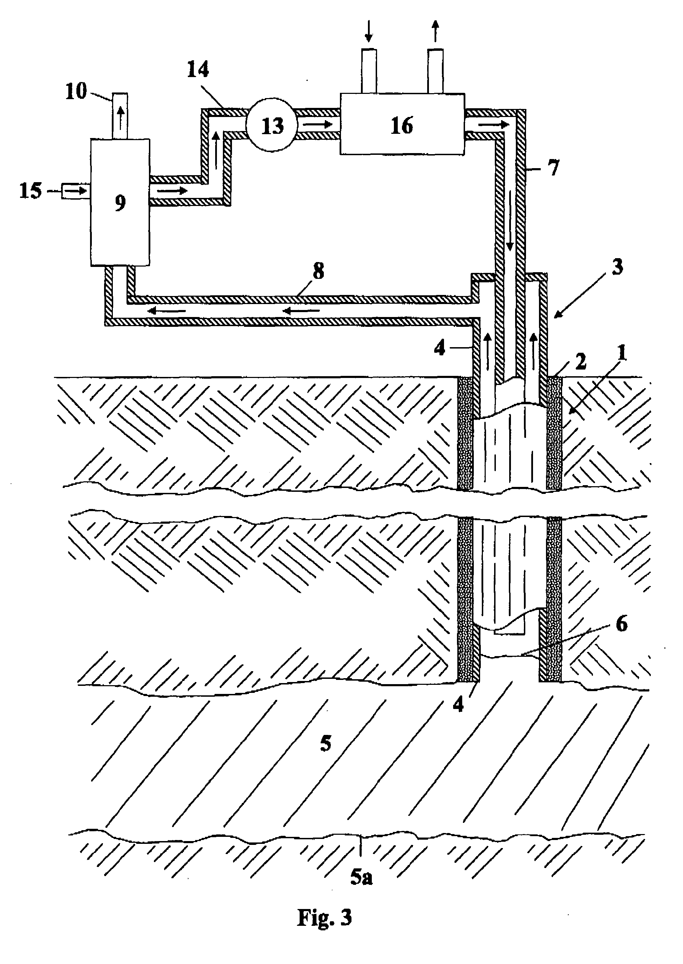

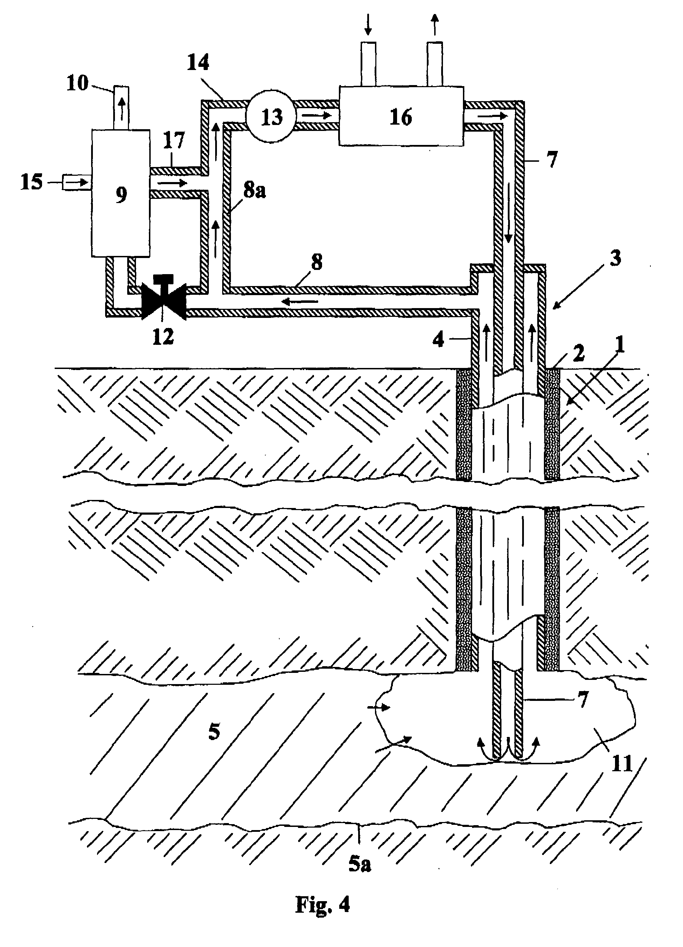

Die in den Figuren 3 und 4 gezeigte Ausführung unterscheidet sich nur dadurch von denen der Figuren 1 und 2, dass das äußere Spülrohr 4 nur bis an den oberen Abschnitt bzw. Anfang der Salzlagerstätte 5 gesetzt wird. Nach Bildung des Hohlraumes 11 wird während Verfahrensstufe II das Innere Rohr 7 zur weiteren Aussolung langsam nach unten gefahren.

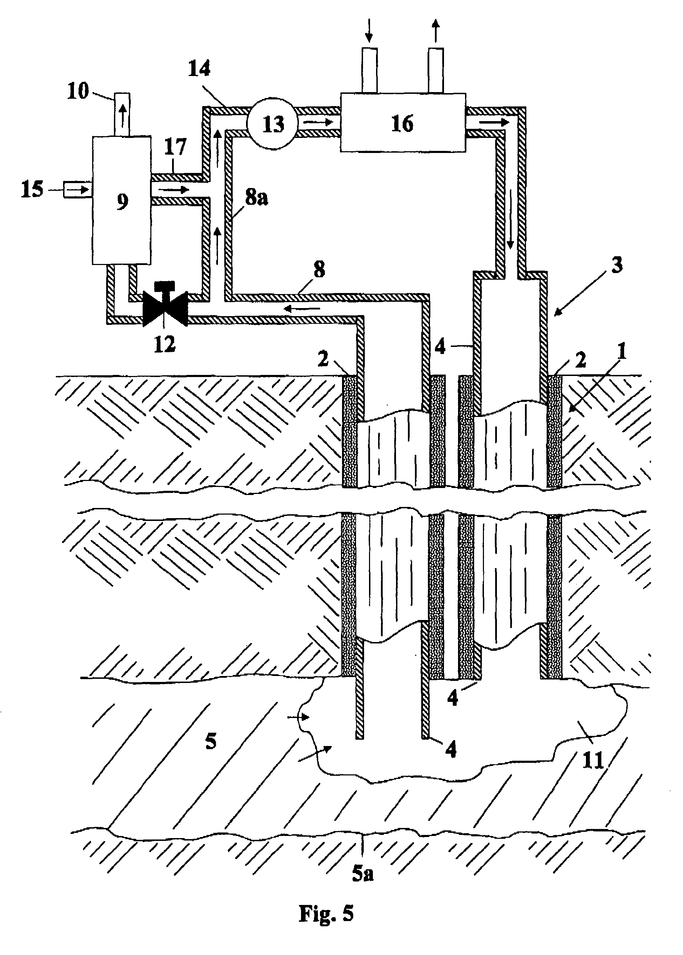

In der Fig. 5 ist eine Ausführung gezeigt bei der die beiden Spülrohre 4 und 7 getrennt voneinander angeordnet sind. Diese Ausführung ermöglicht größere Durchsätze, wobei jedoch zwei getrennte Bohrungen 1 erforderlich sind.

## Patentansprüche

1. Verfahren zur Wärmegewinnung aus geothermischer Energie in Tiefen von über 3000 m aus einer Salzlagerstätte, In der das Salz in plastischer Form vorliegt, mittels mindestens einer sich bis zur Saizlagerstätte erstreckenden Bohrung (1) mit entsprechender Verrohrung (3), **dadurch gekennzeichnet, dass** unterirdisch eine Aussolung der Salzlagerstätte und oberirdisch die Warmeenergiegewinnung vorgenommen werden, wobei
a) zur Aussolung über Spülrohre (4, 7) Wasser (15) in die Salzlagerstätte (5) eingebracht wird unter Bildung einer durch die vorhandene Erdwärme aufgeheizten Sole,
b) die heiße Sole abgepumpt und im Kreislauf einer Anlage zur Energlegewinnung zugeführt und dabei auf Normaltemperatur abgekühlt wird,
c) oberirdisch die abgekühlte Sole oder eine bestimmte Menge an Sole mindestens
zeitweise ausgekreist und durch Frischwasser (15) ersetzt wird,
und dabei die Geschwindigkeit der Aussolung durch Ersatz eines Teils der im Kreislauf geführten Sole durch Wasser so gesteuert wird, dass die Aussolgeschwindlgkelt höher ist als die Fileßgesrhwindigkeit des plastischen Salzes, und während der kombinierten Aussolung und Energiegewinnung ein sich in seinem Volumen stetig vergrößernder Hohlraum (11) mit steigender verfügbarer Wärmemenge gebildet wird.

2. Verfahren nach Anspruch 1, **dadurch gekennzeichnet, dass** in einer ersten Stufe (I) eine Aussolung erfolgt, wobei die Übertage geförderte Sole abgekühlt und verworfen wird.

3. Verfahren nach einem der Ansprüche 1 oder 2, **dadurch gekennzeichnet, dass** während der weiteren Aussolung in einer zweiten Stufe (II) die Verwerfung der Übertage geförderten Sole unterbrochen wird und auf Kreislauffahrwalse mit Wärmerückgewlnnung gemäß den Verfahrensschrltten b) und c) umgestellt wird.

4. Verfahren nach einem der Ansprüche 1 bis 3, **dadurch gekennzeichnet, dass** zum Ausgleich unterschiedlicher Salzplastizitäten die Aussolmenge verändert wird.

5. Verfahren nach einem der Ansprüche 1 bis 4, **dadurch gekennzeichnet, dass** die Menge und/oder Temperatur an zugeführtem Frischwasser (15) so eingestellt wird, dass die Temperatur der geförderten heißen Sole nur in geringem Maße von der in der Salzlagerstätte (5) herrschenden Temperatur abweicht.

6. Verfahren nach einem der Ansprüche 1 bis 5, **dadurch gekennzeichnet, dass** vor Beginn der ersten Stufe (I) in die Bohrung (1) ein konzentrisch angeordnetes erstes Spülrohr (4) eingehängt und in dieses ein zweites Spülrohr (7) eingeführt wird, wobei eines der Spülrohre (4) bis in die Salzschicht (5) geführt wird und sich mit Salz füllt, und das andere Spülrohr (7) so tief versetzt wird, dass es sich kurz oberhalb des nach oben drückenden Salzes (6) befindet.

7. Verfahren nach einem der Ansprüche 1 bis 6, **dadurch gekennzeichnet, dass** das Spülrohr (7), das sich kurz oberhalb des nach oben drückenden Salzes (6) befindet, mit fortschreitender Aussolung Immer tiefer gesetzt wird, bis es sich kurz oberhalb der unter dem Salz liegenden Gesteinsschicht befindet, und ab diesem Zeitpunkt die zweite Stufe (II) beginnt, wobei die Spülrohre (4, 7) so bewegt werden, dass ein langer Strömungsweg für die eintretende Sole entsteht.

8. Verfahren nach einem der Ansprüche 1 bis 7, **dadurch gekennzeichnet, dass** der Übertage geförderten Sole unmittelbar vor dem Wärmeaustausch kontinuierlich eine Menge an aufgehelztem salzfreien Süßwasser (15) zugesetzt wird.

9. Verfahren nach einem der Ansprüche 1 bis 8, **dadurch gekennzeichnet, dass** die nach dem Wärmeaustausch abgekühlte, verdünnte Sole über eines der Spülrohre (7) zurück In die Salzlagerstätte (5) geführt wird.

10. Verfahren nach einem der Ansprüche 1 bis 9, **dadurch gekennzeichnet, dass** eine zusätzliche Rohrleitung innerhalb der Solazuführung zur Salzlagerstätte installiert wird, über die Sulfat fällende Chemikallen in den Hohlraum der Salzlagerstätte eingebracht werden.

11. Verfahren nach einem der Ansprüche 1 bis 10, **dadurch gekennzeichnet, dass** die Übertage nach dem Wärmeaustausch anfallende abgekühlte Sole mit Na₂CO₃ und/oder NaOH gereinigt wird.

12. Verfahren nach einem der Ansprüche 1 bis 11, **dadurch gekennzeichnet, dass** die Rohrleitungen für Solezufuhr und -abfuhr beabstandet zueinander angeordnet werden und unterirdisch über eine horizontale Bohrung oder einen vorhandenen, sich in horizontaler Richtung erstreckenden Hohlraum miteinander verbunden werden.

13. Verfahren nach einem der Ansprüche 1 bis 12, **dadurch gekennzeichnet, dass** mindestens eine weitere Bohrung gesetzt und in diese Spülrohre eingehängt werden, über die eine zweite Verbindung zu dem zur Aussolung bestimmten Hohlraum hergestellt und die vorhandene Sole über einen zweiten Kreislauf zur Wärmegewinnung genutzt wird.
